(19) Europäisches Patentamt
European Patent Office
Office européen des brevets

(11) Veröffentlichungsnummer: **0 184 993 B1**

# (12) EUROPÄISCHE PATENTSCHRIFT

(45) Veröffentlichungstag der Patentschrift: **16.10.91**

(51) Int. Cl.$^5$: **C09B 67/54**, C09B 67/38, D06P 1/18, B01D 71/02

(21) Anmeldenummer: **85810580.2**

(22) Anmeldetag: **06.12.85**

## (54) Verfahren zur Herstellung von Azofarbstoffpräparaten.

(30) Priorität: **12.12.84 CH 5911/84**

(43) Veröffentlichungstag der Anmeldung:
**18.06.86 Patentblatt 86/25**

(45) Bekanntmachung des Hinweises auf die Patenterteilung:
**16.10.91 Patentblatt 91/42**

(84) Benannte Vertragsstaaten:
**BE CH DE FR GB IT LI**

(56) Entgegenhaltungen:
**EP-A- 0 136 619**
**DE-A- 3 301 870**
**FR-A- 2 365 609**
**FR-A- 2 416 924**

**JOURNAL OF FOOD SCIENCE, Band 47, Nr. 2, März-April 1982, Seiten 465-475, Chicago, US; Y.N. LEE et al.: "Purification and concentration of betalaines by ultrafiltration and reverse osmosis"**

(73) Patentinhaber: **CIBA-GEIGY AG**
**Klybeckstrasse 141**
**CH-4002 Basel(CH)**

(72) Erfinder: **Rabassa, Alberto**
**Im Goldbrunnen 20**
**CH-4104 Oberwil(CH)**
Erfinder: **Engler, Gérard, Dr.**
**Rue de Delle 2**
**F-68200 Mulhouse(FR)**

EP 0 184 993 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zur Herstellung von Präparaten von wasserunlöslichen bis schwerlöslichen Azofarbstoffen, die nach dem Verfahren hergestellten Präparate, sowie deren Verwendung zum Färben und Bedrucken von hydrophobem Fasermaterial.

Bei der Herstellung von Präparaten von wasserunlöslichen bis schwerlöslichen Azofarbstoffen war man bislang bestrebt, die Synthese so zu führen, dass am Ende der Reaktion ein möglichst grobkristallines, gut zu filtrierendes Produkt erhalten wird. Das hat jedoch zur Folge, dass im Anschluss an die Filtration eine aufwendige Mahloperation nötig ist, um den Farbstoffpresskuchen in eine feinteilige, zum Färben geeignete Dispersion zu überführen. Sowohl das Heruntermahlen der Farbstoffpartikel, als auch das klassische Filtrierverfahren mittels Filterpressen sind jedoch sehr arbeitsintensive Verfahrensschritte mit hohem Energieverbrauch.

Mit der Entwicklung moderner Membran-Filtertechniken kam daher der Wunsch auf, die Synthese so zu steuern, dass der Farbstoff bereits in einer feinkristallinen Form anfällt, um so jede Mahloperation möglichst zu vermeiden. Ferner versucht man in letzter Zeit im Zuge der Automatisierung die Synthese von Azofarbstoffen weitgehend zu vereinfachen und die Diazotierung und Kupplung nicht mehr wie bislang in diskreten Einzelschritten, womöglich noch unter Klärfiltration des Diazoniumsalzes, sondern kontinuierlich in hintereinandergeschalteten Reaktionsgefässen oder Rohrreaktoren durchzuführen (siehe z.B. DE-A-2903717).

Bei einer solchen Verfahrensführung, bei der bewusst die Herstellung möglichst feinteiliger Dispersionen angestrebt wird, besteht jedoch die Gefahr, dass sich während der Farbstoffsynthese und insbesondere auch im Verlauf der nachfolgenden Trennoperationen Farbstoffteilchen an den Wandungen des Reaktors und bei Einsatz membrangebundener Filtrationsverfahren, auf der Membranoberfläche niederschlagen. Gerade ein Verstopfen der Membrananlage bedeutet jedoch eine empfindliche Störung der gesamten kontinuierlich geführten Farbstoffsynthese. Um dem vorzubeugen wird in der bereits genannten DE-A-2903717 der Zusatz von vor allem kationischen Dispergatoren empfohlen, was jedoch je nach Dispersitätsgrad und Zusammensetzung der Synthesesuspension nicht immer zum Erfolg führt. Hinzu kommt, dass Dispersitätsgrad und Zusammensetzung der Synthesesuspension sich während des Membrantrennverfahrens in einem weiten Bereich ändern, was vielfach die Auswahl einer geeigneten Membran und die Optimierung der Verfahrensbedingungen, wie Druck und Temperatur stark erschwert.

Aus der FR-A-2 365 609 ist ebenfalls ein Verfahren zur Herstellung möglichst feinteiliger Dispersionen von Azofarbstoffen bekannt. Die Farbstoffe fallen als feinteilige Dispersion an, wenn man die Kupplung der Diazo- mit der Kupplungskomponente in Gegenwart nichtionischer oberflächenaktiver Hilfsmittel durchführt. Diese feinteiligen Farbstoffdispersionen werden dann einer Membrantrennung unterzogen, um einen Teil des Wassers und der Salze aus den Dispersionen zu entfernen. Es wird dazu jeweils ein (einziges) Membrantrennverfahren mit einer einzigen Membran, z.B. die Ultrafiltration, verwendet.

Eine Kombination von Membrantrennverfahren unter Verwendung von Membranen mit jeweils unterschiedlichen Trenncharakteristiken und angepasst an die sich im Laufe des Trennprozesses ändernden Eigenschaften der Farbstoffdispersionen findet jedoch nicht statt.

Aufgabe der vorliegenden Erfindung war es daher, dass am Ende der Farbstoffsynthese zur Reinigung und Aufkonzentrierung der Synthesesuspension durchgeführte Membrantrennverfahren so zu gestalten, dass dieses rationell durchführbar und weitgehend störungsunanfällig wird.

Gefunden wurde, dass sich die Nachteile bisheriger Membrantrennverfahren in einfacher Weise dadurch umgehen lassen, dass man anstelle einer einzigen membrangebundenen Trennoperation zwei und mehr derartiger Trennoperationen hintereinanderschaltet, die hinsichtlich der jeweils verwendeten Membran, wie auch der übrigen Parameter dem jeweiligen Zustand der zu reinigenden Synthesesuspension optimal angepasst sind. Man kommt auf diese Weise auch mit weniger Membranfläche aus.

Gegenstand der vorliegenden Erfindung ist somit ein Verfahren zur Herstellung von Präparaten wasserunlöslicher bis schwerlöslicher Azofarbstoffe durch Diazotieren und Kuppeln und anschliessendes Reinigen und Aufkonzentrieren der Synthesedispersion mittels Membrantrennverfahren und Ueberführen der gereinigten und aufkonzentrierten Farbstoffdispersion in eine lagerstabile Flüssigformulierung oder durch Wasserentzug in ein festes Farbstoffpräparat, dadurch gekennzeichnet, dass das Membrantrennverfahren aus mindestens zwei hintereinandergeschalteten Trennoperationen besteht, worin die jeweils verwendeten Membranen unterschiedliche Trenncharakteristiken aufweisen und dem Dispersitätsgrad der Synthesedispersion angepasst sind.

Die im Zusammenhang mit den Trennoperationen stehenden übrigen Betriebsbedingungen, wie z.B. der Druck und die Temperatur, werden in gleicher Weise angepasst.

Bei den wasserunlöslichen bis schwerlöslichen Azofarbstoffen handelt es sich im vorliegenden Fall in

erster Linie um Dispersionsfarbstoffe, die sich vor allem zum Färben von hydrophoben Fasermaterialien eignen.

Als typische Diazokomponenten, die im erfindungsgemässen Verfahren Verwendung finden können, sind z.B. genannt:
4-Nitroanilin, 3-Nitroanilin, 2-Chlor-4-nitroanilin, 2,6-Dichlor-4-nitroanilin, 4-Aminoacetanilid, 2,4-Dinitroanilin, 2-Chlor-4,6-dinitroanilin, 2-Cyan-4-nitroanilin, 4-Cyananilin, 4-Chloranilin, 2,4,5-Trichloranilin, 2,5-Dimethoxyanilin, o-Anisidin, p-Anisidin, o-Phenetidin, p-Phenetidin, o-Toluidin, p-Toluidin, 4-Nitro-2-aminoanisol, 2-Nitro-4-aminoanisol, p-Phenoxyanilin, $\alpha$-Naphthylamin, 4-Methylsulfonylanilin, 4-Amino-2,4-dichlorbenzophenon, 4'-Amino-2,4-dinitrobenzophenon, 2-Aminobenzthiazol, 2-Amino-4-chlorbenzthiazol, 2-Amino-4-cyanbenzthiazol, 2-Amino-4,6-dinitrobenzthiazol, 2-Amino-4-methoxy-6-nitrobenzthiazol.

Als Kupplungskomponenten kommen in Frage:
N-substituierte Aniline, wie z.B. N,N-Dimethylanilin, N,N-Di-($\beta$-carbomethoxyäthyl)-anilin, N-($\gamma$-Methoxypropyl)-3-acetylamino-anilin, N,N-Di-($\beta$-hydroxyäthyl)-3-chlor-anilin, N-Aethyl-N-($\beta$-cyanoäthyl)-anilin, N-(Cyanoäthoxyäthyl)-N-($\beta$-cyanoäthyl)-anilin, N-Aethyl-N-($\beta$-hydroxyäthyl)-anilin, N,N-Di-($\beta$-hydroxyäthyl)-anilin, N-Cyanoäthoxyäthyl-2-amino-4-propionamidoanisol, Bis-(N-cyanoäthoxyäthyl)-2-amino-4-propionamidoanisol; ferner Phenol und substituierte Phenole wie o-, m-, p-Kresol, Resorcinol, 4-Phenylazo-1,3-dihydroxybenzol und 3-Acetylaminophenol, Naphthole, wie 1- oder 2-Naphthol, 6-Brom-2-naphthol, 4-Methoxy-1-naphthol und 2-Naphthol-6-sulfonamid; oder auch Acylacetoarylamide, 2,6-Dihydroxypyridine oder 5-Pyrazolone.

Diazotierung und Kupplung werden in einem sauren Reaktionsmedium durchgeführt, wobei mittels einer Carbonsäure, wie z.B. Essigsäure oder auch einer Mineralsäure, wie z.B. Schwefelsäure oder Salzsäure ein, für die Reaktion hinreichend niedriger pH-Wert eingestellt wird.

Bei der Diazotierung/Kupplung und/oder der anschliessenden Aufkonzentrierung und Entsalzung in einer Membrantrennanlage kann zur Verbesserung des Dispersitätsgrades ein oberflächenaktives Mittel oder ein Gemisch derartiger Hilfsmittel zugesetzt werden. Selbstverständlich kann die Teilchengrösse der Farbstoffpartikel auch durch eine Mahlbehandlung, sei es während der Synthese oder im Anschluss daran entsprechend beeinflusst und auf einen geforderten Wert eingestellt werden.

Als oberflächenaktive Mittel kommen kationische, insbesondere jedoch anionische oder nicht-ionische Tenside in Frage. Neben Tensiden der einen oder anderen Gruppe können auch Tensidgemische eingesetzt werden, wobei in erster Linie Gemische von nicht-ionischen und anionischen bzw. kationischen Tensiden gemeint sind, da anionische und kationische Tenside im Gemisch untereinander zur Bildung von Ausfällungen neigen.

Bei den anionischen Tensiden haben sich insbesondere Kondensationsprodukte von aromatischen Sulfonsäuren mit Formaldehyd, wie Kondensationsprodukte aus Formaldehyd und Naphthalinsulfonsäuren oder aus Formaldehyd, Naphthalinsulfonsäure und Benzolsulfonsäure, oder ein Kondensationsprodukt aus Rohkresol, Formaldehyd und Naphthalinsulfonsäure als wirksam erwiesen. Weiterhin kommen vor allem Ligninsulfonate in Betracht, z.B. solche, die nach dem Sulfit- oder Kraft-Verfahren gewonnen werden. Vorzugsweise handelt es sich um Produkte, die z.T. hydrolysiert, oxidiert oder desulfoniert und nach bekannten Verfahren fraktioniert werden, z.B. nach dem Molekulargewicht oder nach dem Sulfonierungsgrad. Auch Mischungen aus Sulfit- und Kraftligninsulfonaten sind gut wirksam. Besonders geeignet sind Ligninsulfonate mit einem durchschnittlichen Molekulargewicht zwischen 1000 und 80.000, einem Gehalt an aktivem Ligninsulfonat von mindestens 80 % und vorzugsweise mit niedrigem Gehalt an mehrwertigen Kationen. Der Sulfonierungsgrad kann in weiten Grenzen variieren. Das Verhältnis von Kohlenstoff zu organisch gebundenem Schwefel liegt beispielsweise zwischen 9:1 und 55:1. Ferner gehören zu den bevorzugten anionischen Tensiden Dialkylsulfosuccinate, deren Alkylgruppen verzweigt oder unverzweigt sind und je 3 bis 10 Kohlenstoffatome aufweisen, wie z.B. Di-propylsulfosuccinat, Di-isobutylsulfosuccinat, Di-heptylsulfosuccinat, Di-hexylsulfosuccinat und Di-amylsulfosuccinat vorzugsweise jedoch Bis-(2-äthylhexyl)-sulfosuccinat oder Di-octylsulfosuccinat.

Desweiteren werden sulfatierte oder sulfonierte Fettsäuren oder Fettsäureester von Fettsäuren mit 10 bis 22, vorzugsweise 12 bis 18 Kohlenstoffatomen, wie z.B. sulfatierte Oelsäure, Elaidinsäure oder Ricinolsäure bzw. deren niedere Alkylester, z.B. Aethyl-, Propyl- oder Butylester genannt. Sehr gut geeignet sind auch die entsprechenden sulfatierten oder sulfonierten Oele, wie z.B. Olivenöl, Ruböl und vor allem Ricinusöl.

Normalerweise liegen die anionischen Dispergiermittel in Form ihrer Alkalisalze, ihrer Ammoniumsalze oder ihrer wasserlöslichen Aminsalze vor. Vorteilhafterweise werden elektrolytarme Qualitäten eingesetzt.

Als nicht-ionische Tenside kommen z.B. Aethylenoxid-Addukte aus der Klasse der Umsetzungsprodukte von Aethylenoxid mit

a) gesättigten und/oder ungesättigten Fettalkoholen mit 6 bis 20 C-Atomen; oder

b) Alkylphenolen mit 4 bis 12 C-Atomen im Alkylrest; oder
c) gesättigten und/oder ungesättigten Fettaminen mit 14 bis 20 C-Atomen; oder
d) gesättigten und/oder ungesättigten Fettsäuren mit 14 bis 20 C-Atomen in Betracht.

Als Aethylenoxid-Addukte sind im einzelnen genannt:
a) Umsetzungsprodukte von gesättigten und/oder ungesättigten Fettalkoholen mit 6 bis 20 C-Atomen, mit 5 bis 30 Mol Aethylenoxid,
b) Umsetzungsprodukte von Alkylphenolen mit 4 bis 12 C-Atomen mit 5 bis 20 Mol, vorzugsweise 8 bis 15 Mol Aethylenoxid;
c) Umsetzungsprodukte von gesättigten und/oder ungesättigten Fettaminen mit 14 bis 20 C-Atomen mit 5 bis 20 Mol Aethylenoxid;
d) Umsetzungsprodukte von gesättigten und/oder ungesättigten Fettsäuren mit 14 bis 20 C-Atomen mit 5 bis 20 Mol Aethylenoxid.

Auch Gemische der Aethylenoxid-Addukte nach a), b), c) und d) untereinander sind verwendbar. Diese Gemische erhält man durch Mischen einzelner Umsetzungsprodukte oder direkt durch Aethoxylierung eines Gemisches der den Addukten zugrunde liegenden Verbindungen.

Anstelle der reinen Aethoxylate können auch Alkoxylate verwendet werden, die man durch Umsetzen der unter a) bis d) genannten Verbindungen mit Aethylenoxid und Propylenoxid erhält.

Als gesättigte und/oder ungesättigte Fettalkohole kommen für a) Dodecanol, Palmitylalkohol, Stearylalkohol,Oleylalkohol oder Talgfettalkohole, vorzugsweise Hexanol, 2-Aethylhexanol und Decanol in Betracht.

Als Alkylphenole für b) sind Butylphenol, Hexylphenol, vor allem jedoch Isooctylphenol, p-tert.-Octylphenol, Nonylphenol und Dodecylphenol zu nennen.

Als Fettamin für c) kommt z.B. neben Stearylamin und Palmitylamin vor allem Oleylamin in Betracht.

Für d) sind als gesättigte und/oder ungesättigte Fettsäuren z.B. Palmitinsäure, vor allem Stearinsäure und Oelsäure zu nennen.

Bevorzugt zur Anwendung gelangen in vorliegendem Verfahren Aethylenoxid/Propylenoxid-Blockpolymerisate, in erster Linie solche mit mittelständiger Polypropylenglykol-Einheit, einem Molgewicht von 1.000 bis 20.000 und einem Aethylenoxidgehalt unter 50 %.

Als kationische Tenside sind beispielsweise quaternäre Alkylammoniumhalogenide mit mindestens einem $C_{12}$ bis $C_{25}$ Alkylrest und langkettige Alkylpyridiniumhalogenide genannt.

Als Tensidgemische haben sich besonders Gemische aus Naphthalinsulfonsäure-Formaldehydkondensat und einem Aethylenoxid/Propylenoxid-Blockpolymerisat bewährt.

Das Tensid oder Tensidgemisch wird in einer Konzentration von 0,2 bis 20 Gew.-%, insbesondere von 0,5 bis 10 Gew.-%, bezogen auf die Menge an Kupplungskomponente eingesetzt.

Als Membrantrennverfahren gelangen im erfindungsgemässen Verfahren vor allem die folgenden membrangebundenen Filtrationsverfahren zur Anwendung:

- Feinfiltration oder Mikrofiltration unter Verwendung von Porenmembranen mit einem Porendurchmesser von 0,2 bis 40 µm
- Ultra- oder Diafiltration unter Verwendung feinporiger Membranen mit einem Porendurchmesser von 10 Å bis 1 µm
- Hyperfiltration über Ionenaustauscher- oder Lösungsdiffusions-Membranen mit einem Porendurchmesser von < 20 Å
- Elektrodialyse durch Anlegen einer elektrischen Spannung und unter Anwendung von Ionenaustauschermembranen als Diaphragma
- Dialyse über ein Konzentrationsgefälle an ionen-selektiven Membranen.

Zur Theorie und Anwendung von Membrantrennprozessen siehe z.B. H. Strathmann; Chemie-Technik 7, 333 (1978) oder W. Pusch, A. Walch; Angew. Chem. 94, 670 (1982).

Zur Herstellung konzentrierter salzarmer Dispersfarbstoffpräparate nach vorliegendem Verfahren sind insbesondere die Ultrafiltration, die Diafiltration und die Hyperfiltration geeignet.

Als Membranen für die Ultrafiltration bzw. Diafiltration kommen sowohl solche aus organischem, als auch anorganischem Material in Frage. Organische Membranmaterialien sind z.B. Polyvinylidenfluorid, Celluloseacetat, Polytetrafluoräthylen, Polyacrylnitril, Polyäthylenimin, Copolymerisate aus Polyacrylnitril und Vinylpyrrolidon, Polysulfon, Polyamid oder auch hydrophilierte Polyolefine z.B. auf Basis von Polypropylen. Chemisch modifizierte Polyacrylnitrilmembranen (z.B. EP-A-25973), die z.B. erhalten werden durch Umsetzung des Basispolymers mit Hydroxylamin, einer polyfunktionellen niedermolekularen Verbindung, einem reaktive Gruppen enthaltendem Polymer und einer ionischen Verbindung, die mit dem Polymer eine chemische Bindung eingehen kann, und anschliessend mit Aktivchlor, z.B. einer Hypochloritlösung behandelt werden, sind ebenfalls als Ultra- bzw. Diafiltrationsmembranen geeignet. Anorganische Membranen sind z.B. solche aus porösem Kohlenstoff, dessen Oberfläche mit einer dünnen Schicht aus Zirkonoxid oder

Aluminiumoxid belegt ist oder aus porösem Glas oder auch keramische Membranen, z.B. aus Aluminiumoxid. Organische wie anorganische Membranen werden zweckmässiger Weise in Rohrform verwendet, wobei mehrere Röhren in einem Rohrmembranmodul zusammengefasst werden. Bevorzugt zum Einsatz gelangen beispielsweise die folgenden Membranen (die eingeklammerten Zahlen geben den molekularen Trennschnitt oder cut-off level an): Polyacrylnitrilmembran (~ 100.000), Celluloseacetatmembran (~5.000 oder ~20.000), Polysulfonmembran (~10.000), Zirkonoxidmembran (~20.000, ~40.000 oder ~2.000.000).

Die Membranen können natürlich je nach Gerät nicht nur in Form von Rohren vorliegen, sondern auch als Platten, Schlauch oder Hohlfaser ausgebildet sein.

Die Ultra- oder Diafiltration kann sowohl unter Druck, als auch durch Anlegen eines Vakuums betrieben werden. Gearbeitet wird allgemein mit einem Druck von 0,5 bis 10 bar oder einem Vakuum von 200 bis 20 mbar.

Aufgrund ihrer guten Beständigkeit gegenüber Säuren und Laugen bieten vor allem anorganische Membranen die Möglichkeit, die heisse, stark saure Synthesedispersion ohne vorhergehende Neutralisation direkt aufzukonzentrieren und säurefrei zu waschen.

Der Ausdruck Diafiltration bezeichnet im vorliegenden Fall eine Variante der Ultrafiltration, bei der das salzhaltige Filtrat ganz oder teilweise kontinuierlich durch Wasser, vorteilhaft demineralisiertes Wasser ersetzt wird. Auf diese Weise werden Salze und niedermolekulare Nebenprodukte aus der Farbstoffsuspension herausgewaschen, wobei deren Farbstoffgehalt mehr oder weniger konstant bleibt.

Bei der im vorliegenden insbesondere zur Aufkonzentrierung der bereits weitgehend entsalzten und neutralen Farbstoffdispersion verwendeten Hyperfiltration handelt es sich um eine selektive Molekulartrennmethode, die unter Verwendung semipermeabler Membranen mit einem Trennschnitt im Molekulargewichtsbereich von 300 bis 1.000 vorzugsweise 400 bis 500 durchgeführt wird. Derartige Membranen lassen Wasser und aufgelöste Stoffe, die auf Grund ihres Molekulargewichts unterhalb der Trenngrenze liegen, bei geringem bis mittlerem Druck durchtreten. Erfindungsgemäss werden Drucke von 10 bis 100 bar und vorzugsweise von 10 bis 30 bar verwendet.

Die im erfindungsgemässen Verfahren aufgrund ihrer guten Trenneigenschaften bevorzugt für die Hyperfiltration verwendeten Membranen bestehen aus einem polymeren Material, das vorwiegend an der Oberfläche durch saure oder basische Gruppen modifiziert ist.

Bei dem polymeren Membranmaterial handelt es sich um natürliche, halbsynthetische oder synthetische Materialien, die als reaktionsfähige Gruppen beispielsweise Hydroxyl, Amino- und/oder Amidoximgruppen enthalten. Derartige Materialien können mit geeigneten Reagenzien umgesetzt werden, die einerseits saure oder basische Gruppen und andererseits mindestens eine unter Bildung einer chemischen (kovalenten) Bindung reaktionsfähige Gruppierung enthalten.

Bei den sauren Gruppen handelt es sich in erster Linie um Carboxyl- und Sulfongruppen und bei den basischen Gruppen um primäre, sekundäre oder tertiäre Aminogruppen, ferner Phosphonium- oder Sulfoniumgruppen.

Beispielsweise können folgende Polymere in der angegebenen Weise modifiziert werden:

- Celluloseacetate, z.B. solche mit niedrigem Acetylgruppengehalt, aber auch höher acylierte Cellulose, z.B. sog. Zweieinhalbacetat, oder
- Polyvinylalkohole, oder
- Polyacrylnitril und Copolymere aus Acrylnitril und anderen äthylenisch ungesättigten Monomeren.

Als reaktive Reagenzien, die eine saure oder basische Gruppe enthalten, kommen farblose und farbige Verbindungen in Betracht, vor allem saure Reaktivfarbstoffe, die verschiedenen Klassen angehören können, wie Anthrachinon-, Azo- oder Formazanfarbstoffe. Sie können gegebenenfalls auch als Metallkomplexe vorliegen.

Besonders wertvoll und vielseitig anwendbar sind die Polymermembranen, die durch einen sulfonsäuregruppenhaltigen Azofarbstoff modifiziert sind. Der Azofarbstoff kann auch komplex gebundenes Metall, beispielsweise Kupfer, enthalten. Derartige Membranen sind z.B. in den DE-A 25 05 254 und 30 35 134 und in den EP-A-25 973, 26 399, 47 953 und 61 424 beschrieben.

Die im erfindungsgemässen Verfahren verwendeten Membranen weisen vorzugsweise einen Porendurchmesser von 0,1 bis 50 nm auf.

Weitere geeignete Membranen, mit denen ebenfalls ein guter Entsalzungseffekt erzielt wird, sind z.B. solche auf Basis von gegebenenfalls chemisch modifizierten Polysulfonen, Polyamiden oder Polystyrol.

Allgemein hat die Syntheselösung vor dem Membrantrennverfahren einen Trockensubstanzgehalt von 5 bis 15 Gew.-% und die Aufkonzentrierung wird so lang durchgeführt, bis der Trockensubstanzgehalt auf einen Wert von 20 bis 50 % gestiegen ist.

Erfindungswesentlich ist, dass im vorliegenden Verfahren mindestens zwei der Synthesedispersion angepasste Membrantrennverfahren zur Anwendung gelangen. Als der Synthesedispersion angepasste

Membrantrennverfahren werden solche Verfahren verstanden, die aufgrund der ausgewählten Membran und der Betriebsbedingungen, wie Druck, Vakuum und Temperatur möglichst optimal auf den Dispersitätsgrad, die Temperatur, den pH-Wert und die Zusammensetzung der Synthesesuspension zugeschnitten sind.

So erweist es sich als zweckmässig und oft auch ausreichend, die heisse, stark saure Synthesedispersion zunächst einer Ultrafiltration und anschliessend einer Diafiltration zu unterwerfen. Dabei verwendet man zur Ultrafiltration vorteilhaft die chemisch beständigen Zirkonoxidmembranen mit einem Trennschnitt im Bereich von 30.000 bis ca. 2.000.000. Die Farbstoffpartikel sind hier wegen des hohen Salzgehaltes der Synthesedispersion bis zu einem gewissen Grad agglomeriert, so dass Membranen mit relativ grossem Trennschnitt verwendet werden können. Vorteilhaft verwendet man Zirkonoxidmembranen mit einem Trennschnitt von 30.000 bis 60.000.

Da die Farbstoffpartikel in Form grösserer Aggregate vorliegen, kann anstelle der Ultrafiltration zweckmässiger Weise auch eine Fein- oder Mikrofiltration durchgeführt werden, die aufgrund der hohen Durchflussgeschwindigkeit ein rasches Abtrennen der Hauptsäuremenge, sowie Salze und niedermolekularer Nebenprodukte von der Synthesedispersion ermöglicht. Eingesetzt werden hierzu vor allem Metallfilter z.B. aus Edelstahl oder Monel mit einem Porendurchmesser von 0,2 bis 40 µm, insbesondere 0,2 bis 1 µm, oder poröse Polypropylenmembranen mit einem Porendurchmesser von 0,2 bis 1 µm.

Zur Diafiltration verwendet man ebenfalls zweckmässiger Weise eine widerstandsfähige Membran, z.B. eine Polysulfon- oder eine Polyamidmembran, die bei Temperaturen unter 50° C bzw. unter 80° C in einem weiten pH-Bereich stabil sind. Es erweist sich jedoch als vorteilhaft auch hier eine Zirkonoxidmembran einzusetzten, die jedoch wegen des zunehmenden Dispersitätsgrades der Farbstoffdispersion einen geringeren Trennschnitt aufweist, als die in der ersten Filtrationsstufe verwendete Membran. Der Trennschnitt liegt hier in einem Bereich von 10.000 bis 50.000:

Mit Hilfe der Diafiltration wird die Farbstoffdispersion weitgehend salzfrei gewaschen und von niedermolekularen gelösten Nebenprodukten befreit. Zur Neutralisierung der Farbstoffdispersion erweist es sich als zweckmässig, dem während der Diafiltration zugeführten Frischwasser Alkali zuzusetzen. Um den gewünschten Endfarbstoffgehalt einzustellen kann die Farbstoffdispersion abschliessend nach klassischen Verfahren beispielsweise durch Eindampfen oder Zentrifugieren aufkonzentriert werden oder einer dritten membrangebundenen Trennoperation unterworfen werden und zwar der Hyperfiltration. Hier verwendet man vorteilhaft anionisch modifizierte Polyacrylnitril- oder Celluloseacetatmembranen mit einem Trennschnitt von 400 bis 500. Um ein Verstopfen der feinen Membrankanäle durch Farbstoffpartikel zu vermeiden, erweist es sich als zweckmässig, der Farbstoffdispersion vor und/oder während der Hyperfiltration ein anionisches oberflächenaktives Hilfsmittel zuzusetzen, da während der zuvor durchgeführten Ultra- und Diafiltration ein Grossteil des gegebenenfalls bereits von der Synthese her in der Dispersion vorhandenen oberflächenaktiven Mittels abgetrennt wurde. Während der Hyperfiltration entsteht praktisch kein Verlust an oberflächenaktivem Mittel.

Da es um die Aufkonzentrierung eines dispersen Systems geht, kann in der dritten Stufe anstelle der Hyperfiltration natürlich auch eine weitere Ultrafiltration gegebenenfalls in Kombination mit einer Diafiltration durchgeführt werden. Da die Farbstoffdispersion hier weitgehend neutral ist können auch weniger resistente Membranen, wie z.B. Celluloseacetatmembranen verwendet werden. Wichtig ist jedoch, dass der Trennschnitt der Membran der zunehmend feinteiliger werdender Dispersion angepasst ist. Vorteilhaft verwendet man in dieser dritte Stufe Membranen mit einem Trennschnitt von 5.000 bis 20.000.

Ferner kann die dritte Stufe, die Aufkonzentrierung der Farbstoffdispersion, mit Hilfe einer kombinierten Ultrafiltration und Hyperfiltration durchgeführt werden. Danach wird beispielsweise die Hauptmenge des Wasser durch Ultrafiltration und eine Restmenge durch anschliessende Hyperfiltration abgetrennt.

Insbesondere bewährt hat sich jedoch ein Verfahren, wonach zwischen Diafiltration und Aufkonzentrieren der Farbstoffdispersion noch eine weitere Diafiltration zwischengeschaltet wird, die neben der Entsalzung vor allem der pH-Einstellung, also der Neutralisierung der Synthesesuspension dient. Das geschieht dadurch, dass man während der Diafiltration Alkalilauge, z.B. Natronlauge zusetzt, bis ein pH-Wert von ca. 6 bis 8 erreicht ist. Hierzu verwendet man vorteilhaft Membranen mit einem Trennschnitt im Bereich von 1.000 bis 100.000, beispielsweise Polysulfon, Polyäthylenimin oder Polypropylenmembranen mit einem Trennschnitt von ca. 10.000.

Dieses besonders bevorzugte Verfahren besteht demnach aus den folgenden hintereinandergeschalteten membrangebundenen Trennoperationen:

- Ultrafiltration über Zirkonoxidmembranen mit einem Trennschnitt von 30.000 bis 60.000, zur Abtrennung eines Teils der Schwefelsäure und niedermolekularer Nebenprodukte aus der Synthesesuspension und Erhöhen des Farbstoffgehalts auf ca. 10 %.
- Diafiltration unter Verwendung von Zirkonoxidmembranen mit einem Trennschnitt von 10.000 bis 30.000 zur Erniedrigung des Salzgehalts.

- Diafiltration über eine Polysulfonmembran mit einem Trennschnitt von ca. 10.000 unter gleichzeitiger pH-Einstellung und weiterer Erniedrigung des Salzgehalts.
- Kombinierte Ultrafiltration und Diafiltration, wodurch der Restsalzgehalt der Farbstoffsuspension auf Werte unter 1 Gew.-% gesenkt und die Farbstoffkonzentration auf 20 bis 50 Gew.-% erhöht wird. Verwendet wird hier ebenfalls vorteilhaft eine Polysulfonmembran mit einem Trennschnitt von ca. 10.000. Während der Diafiltration setzt man der Farbstoffdispersion zweckmässigerweise über das Frischwasser oberflächenaktive Mittel zu. Oberflächenaktive Mittel, insbesondere nichtionische bilden Mizellstrukturen und lose Aggregate und werden daher in der letzten Stufe, in der Membranen mit relativ niedrigem Trennschnitt eingesetzt werden, weitgehend zurückgehalten.

Im Rahmen einer rationellen Arbeitsweise erweist es sich als besonders vorteilhaft, die Farbstoffsynthese und die anschliessende Membranbehandlung kontiniuierlich durchzuführen. D.h. die fortlaufend den Kupplungsreaktor verlassende Synthesesuspension wird direkt in eine Kaskade der vorstehend im einzelnen erläuterten Membraneinheiten geleitet und verlässt diese am Ende als gereinigte salzarme, konzentrierte, neutrale Farbstoffdispersion, die direkt zu einem verkaufsfertigen Flüssigpräparat oder einer festen Handelsform weiterverarbeitet werden kann.

Für eine kontinuierliche Durchführung des Verfahrens als besonders geeignet erweist sich ein Mehrkammerreaktor,wie er in der DE-A-3336247 beschrieben ist. Die Membraneinheiten werden hier vorteilhaft in die letzten Kammern des Reaktors eingebaut, so dass die Synthesedispersion vor Verlassen des Reaktors nacheinander die einzelnen Kaskadenelemente durchströmt.

Vor der Weiterverarbeitung der gereinigten, aufkonzentrierten Farbstoffdispersion zu einem flüssigen oder festen Farbstoffpräparat wird diese zweckmässiger Weise einer thermischen Nachbehandlung unterworfen. Dadurch wird der kolloiddisperse Anteil verringert und der Farbstoff in eine färbestabile Modifikation überführt. Dies geschieht vorteilhaft kontinuierlich in einem nachgeschalteten Reaktor, wo die Farbstoffdispersion unter intensiver Durchmischung bei einer Verweilzeit von 10 Minuten bis zu 2 Stunden auf eine Temperatur von 40 bis 100 °C erhitzt wird. Ein Erhitzen der Farbstoffdispersion auf Temperaturen über 100 °C ist ebenfalls möglich, nur muss dann unter Druck gearbeitet werden.

Zur Herstellung einer handelsfertigen Flüssigform ist die Farbstoffdispersion gegebenenfalls nach Zugabe von den, für Flüssigformulierungen üblichen Zusätzen, wie schaumdämpfenden Mitteln, Gefrierschutzmitteln, Feuchthaltemitteln, Dispergiermitteln und/oder Antimikrobika, nur noch durch Verdünnen und/oder mit Hilfe von Coupagemitteln auf einen vorgegebenen Endfarbstoffgehalt einzustellen. Die Farbstoffdispersion kann aber auch, gegebenenfalls nach Zugabe von Zusätzen, wie Bindemitteln, Entstäubungsmitteln, Netzmitteln, Dispergiermitteln und/oder Coupagemitteln, durch Wasserentzug, in ein festes Farbstoffpräparat überführt werden. Dank der erhöhten Farbstoffkonzentration benötigt man weniger Energie zum Trocknen. Man verwendet übliche Trocknungsverfahren, insbesondere die Sprühtrocknung.

Verwendung finden die Farbstoffpräparate zur Herstellung von Färbebädern, Klotzflotten oder Druckpasten, die sich vor allem zum Färben von hydrophobem Fasermaterial, insbesondere solchem aus Polyester eignen.
Die folgenden Beispiele dienen der Erläuterung der Erfindung; Teile bedeuten Gewichtsteile und Prozente Gewichtsprozente.

Beispiel 1: Kontinuierliche Diazotierung und Kupplung:

Man geht aus von 2-Chlor-4,6-dinitroanilin als Diazokomponente und einer äquimolaren Mischung aus N-Cyanoäthoxyäthyl-2-amino-4-propionamidoanisol und Bis-(N-cyanoäthoxyäthyl)-2-amino-4-propionamidoanisol als Kupplungskomponente. Diazotiertes 2-Chlor-4,6-dinitroanilin ist in konzentrierter Schwefelsäure löslich und wird kontinuierlich in einem Rohrreaktor hergestellt durch gleichzeitiges Zudosieren von 5,46 Teilen/Min. einer 38 %igen Lösung der Diazokomponente in 98 %iger Schwefelsäure und 2,90 Teilen/Min. 40 %iger Nitrosylschwefelsäure. Um eine gute Durchmischung der zwei Ströme zu gewährleisten, ist der Rohrreaktor mit statischen Mischelementen ausgerüstet. Die ausreagierte Diazolösung verlässt den Rohrreaktor mit einer Temperatur von 60 °C und wird dann auf 30 °C gekühlt.

Die Diazolösung wird anschliessend in 3 Ströme aufgeteilt und in die 1., 3. und 5. Kammer eines Mehrkammerreaktors (vergl. DE-A-3336247) dosiert. Gleichzeitig werden 7,63 Teile/Minute einer 70 %igen essigsauren Lösung der Kupplungskomponente, in die erste Kammer gepumpt und dem Reaktionsgemisch in den Kammern 1, 3 und 5 385 Teile/Minute einer 2 %igen wässrigen gekühlten Natriumhydroxidlösung zugemischt. Dadurch wird der pH-Wert der Kupplungssuspension in einem Bereich von 1,4 bis 1,6 gehalten. Die Kupplungsreaktion wird in Gegenwart oberflächenaktiver Mittel durchgeführt und zwar wird die Lösung der Kupplungskomponente mit 0,3 % eines Naphthalinsulfonsäure-Formaldehydkondensats und 0,05 % eines Aethylenoxid/Propylenoxid-Blockpolymerisats mit MG 3600 versetzt. Um eine möglichst

feinteilige Dispersion zu erhalten und Produktablagerungen im Reaktor zu verhindern, können in den Dosierungskammern 1, 3 und 5 Mahlkörper (wie z.B. Glaskugeln) eingesetzt werden.

Kontinuierliches Reinigen und Aufkonzentrieren der Synthesedispersion:
In die letzten Stufen des Mehrkammerreaktors sind vier Membraneinheiten mit unterschiedlicher Trenncharakteristik eingebaut.

In der ersten Trennstufe wird ein Grossteil der stark sauren Flüssigphase entfernt und die Farbstoffkonzentration der Synthesedispersion von 2 auf 10 % erhöht. Man verwendet hier eine chemisch beständige Membran aus Zirkonoxid (Graphitmatrix, die auf der Innenseite mit Zirkonoxid beschichtet ist) in Rohrform, mit einem Trennschnitt bei ca. 40.000. Neben Schwefelsäure werden auch Verunreinigungen abgetrennt.

Die zweite Trennstufe dient der Diafiltration. Hier wird das abgetrennte Permeat laufend durch Frischwasser ersetzt und so ein Grossteil der Salze aus der Synthesedispersion herausgewaschen. Die hier verwendete rohrförmige Membran besteht ebenfalls aus keramischem Zirkonoxid. Der Trennschnitt liegt bei 20.000. Die Farbstoffkonzentration der Dispersion verändert sich während dieser zweiten Trennoperation praktisch nicht und bleibt etwa konstant bei 10 %.

In der dritten Trennstufe wird mittels Diafiltration der Elektrolytgehalt weiter verringert und der pH der Farbstoffdispersion durch Zugabe von 1 molarer Natronlauge auf einen Wert von 6,5 bis 7,5 eingestellt. Man verwendet hier eine Polysulfonmembran mit einem Trennschnitt von ca. 10.000.

In der vierten und letzten Trennstufe erfolgt eine kombinierte Diafiltration und Aufkonzentrierung der Farbstoffdispersion. Zur Diafiltration wird hier eine 0,5 %ige wässrige Lösung eines Naphthalinsulfonsäure-Formaldehydkondensats zugegeben; In dieser letzten Stufe wird die gleiche Polysulfon Membran verwendet.

Die Farbstoffdispersion verlässt den Mehrkammerreaktor nach der Membranfiltration mit einer Elektrolytkonzentration von<1 % und einem pH von 6,5. Die praktisch elektrolytfreie, neutrale, konzentrierte Farbstoffdispersion (Farbstoffgehalt ca. 30%) wird anschliessend noch in einem ideal durchmischten Reaktor bei einer Temperatur von 65° C thermisch stabilisiert; die Verweilzeit beträgt ca. 20 Minuten.

Die so erhaltene Farbstoffdispersion kann direkt standardisiert und zu einer flüssigen Handelsform oder einem festen Präparat weiterverarbeitet werden. Zur Herstellung eines festen Präparats wird die Farbstoffdispersion durch Zugabe von Coupagemittel (Oxyligninsulfonat) auf die gewünschte Farbstärke eingestellt, ferner wird noch ein Netzmittel zugegeben und anschliessend erfolgt die Sprühtrocknung. Man erhält so ein Farbstoffgranulat der folgenden Zusammensetzung:

31% Dispersfarbstoffe der Formel

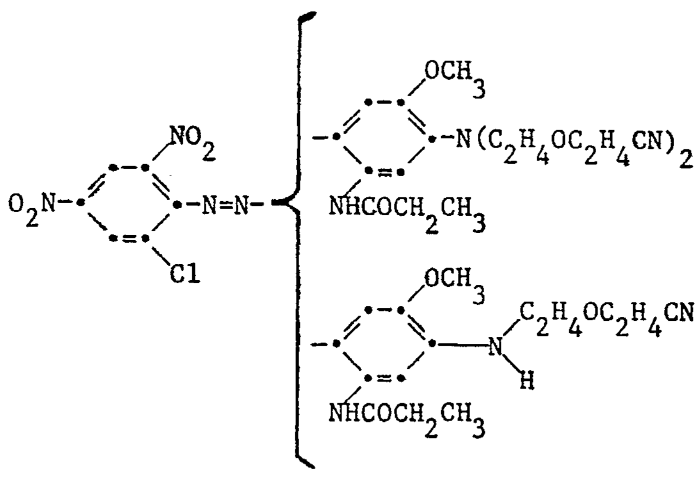

im Verhältnis von ~ 1:1.

3 % Naphthalinsulfonsäure-Formaldehydkondensat

1 % 2-Heptadecyl-benzimidazoldisulfonsäure (als Na-Salz)

59 % Oxyligninsulfonat (Verhältnis Kohlenstoff:Schwefel ~ 33.1)

6 % Restfeuchte

Das Präparat eignet sich zum Färben von Polyester-, Acetat- sowie Triacetat-Fasermaterialien in blauen Tönen.

<u>Beispiel 2</u>: Kontinuierliche Diazotierung und Kupplung:

Man geht aus von 2-Chlor-4,6-dinitroanilin als Diazokomponente und einer äquimolaren Mischung aus N-Cyanoäthoxyäthyl-2-amino-4-propionamidoanisol und Bis-(N-cyanoäthoxyäthyl)-2-amino-4-propionamidoanisol als Kupplungskomponente. Diazotiertes 2-Chlor-4,6-dinitroanilin ist in konzentrierter Schwefelsäure löslich und wird kontinuierlich in einem Rohrreaktor hergestellt durch gleichzeitiges Zudosieren von 5,46 Teilen/Minute einer 38 %igen Lösung der Diazokomponente in 98 %iger Schwefelsäure und 2,90 Teilen/Minuten 40 %iger Nitrosylschwefelsäure. Um eine gute Durchmischung der zwei Ströme zu gewährleisten, ist der Rohrreaktor mit statischen Mischelementen ausgerüstet. Die ausreagierte Diazolösung verlässt den Rohrreaktor mit einer Temperatur von 60° C und wird dann auf 30° C gekühlt.

Die Diazolösung wird anschliessend in einen Durchlaufrührkessel dosiert,wo sie mit 7,63 Teilen/Minute einer 70 %igen essigsauren Lösung der Kupplungskomponente umgesetzt wird. Gleichzeitig werden dem Reaktionsgemisch 385 Teile/Minute einer 2 %igen wässrigen, gekühlten Natriumhydroxidlösung zugemischt. Dadurch wird der pH-Wert der Kupplungssuspension in einem Bereich von 1,4 bis 1,6 gehalten. Damit eine rasche Durchmischung der Reaktionspartner gewährleistet ist, ist der Kupplungsreaktor mit einem Dispergiergerät (20000 Upm) ausgerüstet und die 3 Ströme werden in das Zentrum des Rührkopfes geführt. Nach einer Verweilzeit von 4 - 7 Minuten verlässt die Kupplungssuspension den Reaktor mit einer Temperatur von 14 - 15° C. Die Farbstoffsuspension wird entweder zwischengelagert oder direkt einer Membrantrennanlage zugeleitet.

Kontinuierliches Reinigen und Aufkonzentrieren der Synthesesuspension:

In einer Membrantrennanlage, die drei unterschiedliche Trennstufen umfasst, ausgerüstet mit Modulen verschiedener Trenncharakteristik wird die Kupplungssuspension wie folgt entsalzt und aufkonzentriert.

Im ersten Aufkonzentrier-Modul wird ein Grossteil der stark sauren Flüssigphase entfernt (und damit die gelösten Verunreinigungen) und die Farbstoffkonzentration auf 10% erhöht. Man verwendet hier eine chemisch beständige Membran aus Zirkonoxid (Graphitmatrix, die auf der Innenseite mit Zirkonoxid beschichtet ist) in Rohrform, mit einer Porengrösse von ca. 0,14 µm und einer Permeatleistung bei 35° C und einem $\Delta P \cong 1{,}5$ bar von 400 L/m$^2$.Std.

Die zweite Trennstufe dient der Diafiltration. Hier wird das abgetrennte Permeat laufend durch Waschwasser ersetzt und so ein Grossteil der Salze aus der Synthesedispersion herausgewaschen. Die hier verwendete rohrförmige Membran besteht ebenfalls aus keramischem Zirkonoxid. Der Trennschnitt liegt bei ca. 20.000. Die Farbstoffkonzentration der Dispersion verändert sich während dieser zweiten Trennoperation praktisch nicht und bleibt etwa konstant bei 10%. Die erzielte Permeatleistung bei 35° C und einem $\Delta P \cong 1{,}6$ bar beträgt 160 L/m$^2$.Std.

In der dritten und letzten Trennstufe wird gleichzeitig entsalzt und aufkonzentriert sowie die Dispersibilität der Farbstoffsuspension durch Zugabe einer 0,5 %igen wässrigen Lösung eines Naphthalinsulfonsäure-Formaldehydkondensats erhöht. Man verwendet hier eine rohrförmige Membran aus Zirkonoxid mit einem Trennschnitt von 10.000. Bei 35° C und einem $\Delta P \cong 1{,}8$ erzielt man eine Permeatleistung von 120 L/m$^2$.Std.

Die Farbstoffdispersion verlässt die Membrantrennanlage mit einem Entsalzungsfaktor von 0,06 (Endelektrolytgehalt zu Anfangselektrolytgehalt) und einer Farbstoffkonzentration, die um das 8fache höher liegt, als die Anfangskonzentration.

Die praktisch elektrolytfreie, konzentrierte Farbstoffdispersion wird anschliessend noch in einem ideal durchmischten Reaktor bei einer Temperatur von 65° C thermisch stabilisiert; die Verweilzeit beträgt ca. 20 Minuten.

Die so erhaltene Farbstoffdispersion wird standardisiert wie im Beispiel 1 beschrieben und man erhält ein Farbstoffgranulat mit der dort angegebenen Zusammensetzung.

Beispiel 3: Kontinuierliche Diazotierung und Kupplung:

Man geht von 2,6-Dichlor-4-nitroanilin als Diazokomponente und einer 54 %igen Lösung von N,N-Bis(2-hydroxyäthyl)-3-chlor-anilin in 47 %iger Schwefelsäure als Kupplungskomponente aus. Diazotiertes 2,6-Dichlor-4-nitroanilin ist in konzentrierter Schwefelsäure löslich und wird kontinuierlich in einem Rohrreaktor hergestellt durch gleichzeitiges Zudosieren von 16,7 Teilen/Minute einer 40 %igen Lösung der Diazokomponente in 98 %iger Schwefelsäure und 10,4 Teilen/Minute 40 %iger Nitrosylschwefelsäure. Um eine gute Durchmischung der zwei Ströme zu gewährleisten, ist der Rohrreaktor mit statischen Mischelementen ausgerüstet. Die ausreagierte Diazolösung verlässt den Rohrreaktor mit einer Temperatur von 62° C und wird dann auf 30° C gekühlt.

Die Diazolösung wird anschliessend in einen Durchlaufrührkessel dosiert wo sie mit 13,07 Teilen/Minute einer schwefelsauren Lösung der Kupplungskomponente umgesetzt wird. Gleichzeitig werden dem Reaktionsgemisch 353 Teile/Minute Wasser zugemischt.
Damit eine rasche Durchmischung der Reaktionspartner gewährleistet ist, ist der Kupplungsreaktor mit einem Dispergiergerät (20000 Upm) ausgerüstet und die 3 Ströme werden in das Zentrum des Rührkopfes geführt. Nach einer Verweilzeit von 4 - 7 Minuten verlässt die Kupplungssuspension den Reaktor mit einer Temperatur von 35° C. Die Kupplungssuspension gelangt anschliessend in einen Lagertank oder wird direkt einer Membrantrennanlage zugeführt.

Kontinuierliches Reinigen und Aufkonzentrieren der Synthesesuspension:

In einer Membrantrennanlage, die drei unterschiedliche Trennstufen umfasst, ausgerüstet mit Modulen verschiedener Trenncharakteristik wird die Kupplungssuspension wie folgt entsalzt und aufkonzentriert.

Im ersten Aufkonzentrier-Modul wird ein Grossteil der stark sauren Flüssigphase entfernt (und damit die gelösten Verunreinigungen) und die Farbstoffkonzentration auf 12 % erhöht. Man verwendet hier eine chemisch beständige Membran aus Zirkonoxid (Graphitmatrix, die auf der Innenseite mit Zirkonoxid beschichtet ist) in Rohrform, mit einem Trennschnitt bei 2.000.000 und einer Permeatleistung bei 15° C und einem $\Delta P \cong 1{,}5$ bar von 380 L/m².Std.

Die zweite Trennstufe dient der Diafiltration.
Hier wird das abgetrennte Permeat laufend durch Waschwasser ersetzt und so ein Grossteil der Salze aus der Synthesedispersion herausgewaschen. Die hier verwendete rohrförmige Membran besteht ebenfalls aus keramischem Zirkonoxid. Der Trennschnitt liegt bei ca. 40.000. Die Farbstoffkonzentration der Dispersion verändert sich während dieser zweiten Trennoperation praktisch nicht und bleibt etwa konstant bei 12 %. Die erzielte Permeatleistung bei 15° C und einem $\Delta P \cong 1{,}7$ bar beträgt 200 L/m².Std.

In der dritten und letzten Trennstufe wird gleichzeitig entsalzt und aufkonzentriert sowie die Dispersibilität der Farbstoffsuspension durch Zugabe einer 0,6 %igen wässrigen Lösung eines Natriumsalzes eines chemisch modifizierten, niedermolekularen Ligninpolymers erhöht. Man verwendet hier eine rohrförmige Membran aus Zirkonoxid mit einem Trennschnitt von 20.000.
Bei 35° C und einem $\Delta P = 1{,}7$ erzielt man eine Permeatleistung von 150 L/m².Std.
Die Farbstoffdispersion verlässt die Membrantrennanlage mit einem Entsalzungsfaktor von 0,06 und einer Farbstoffkonzentration, die um ca. das 8fache höher ist, als die Anfangskonzentration.
Die praktisch elektrolytfreie, konzentrierte Farbstoffdispersion wird anschliessend noch in einem ideal durchmischten Reaktor bei einer Temperatur von 75° C thermisch stabilisiert; die Verweilzeit beträgt ca. 20 Minuten.

Die so erhaltene Farbstoffdispersion kann direkt standardisiert und zu einer flüssigen Handelsform oder einem festen Präparat weiterverarbeitet werden. Zur Herstellung eines festen Präparats wird die Farbstoffdispersion durch Zugabe von Coupagemittel (chemisch modifiziertes hochmolekulares Ligninpolymer als Natriumsalz) auf die gewünschte Farbstärke eingestellt, ferner wird noch ein Netzmittel zugegeben und anschliessend erfolgt die Sprühtrocknung. Man erhält so ein Farbstoffgranulat der folgenden Zusammensetzung:

58% Dispersionsfarbstoff der Formel

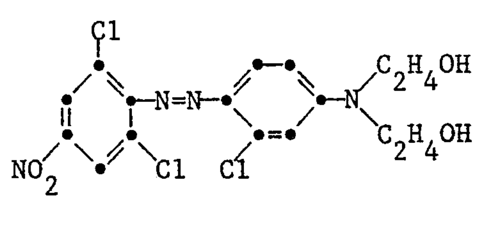

34,6% Natriumsalz eines chemisch modifizierten hochmolekularen Ligninpolymeres
2,0% Naphthalinsulfonsäure-Formaldehydkondensat
0,4% eines ditertiären Aethylen-Glycols als nichtionisches Tensid
5,0% Restfeuchte

Das Präparat eignet sich zum Färben von Polyester-, Acetat- sowie Triacetat-Fasermaterialien in braunen Tönen.

## Patentansprüche

**1.** Verfahren zur Herstellung von Präparaten wasserunlöslicher bis schwerlöslicher Azofarbstoffe durch

Diazotieren und Kuppeln und anschliessendes Reinigen und Aufkonzentrieren der Synthesedispersion mittels Membrantrennverfahren und Ueberführen der gereinigten und aufkonzentrierten Farbstoffdispersion in eine lagerstabile Flüssigformulierung oder durch Wasserentzug in ein festes Farbstoffpräparat, dadurch gekennzeichnet, dass das Membrantrennverfahren aus mindestens zwei hintereinandergeschalteten Trennoperationen besteht, worin die jeweils verwendeten Membranen unterschiedliche Trenncharakteristiken aufweisen und dem Dispersitätsgrad der Synthesedispersion angepasst sind.

2. Verfahren gemäss Anspruch 1, dadurch gekennzeichnet, dass das Membrantrennverfahren aus einer Ultrafiltration und einer Diafiltration besteht.

3. Verfahren gemäss Anspruch 2, dadurch gekennzeichnet, dass man sowohl zur Ultrafiltration,wie auch Diafiltration eine Zirkonoxidmembran mit einem Trennschnitt von 30.000 bis 60.000 bzw. 10.000 bis 30.000 verwendet.

4. Verfahren gemäss Anspruch 1, dadurch gekennzeichnet, dass das Membrantrennverfahren aus einer Fein- oder Mikrofiltration und einer Diafiltration besteht.

5. Verfahren gemäss Anspruch 4, dadurch gekennzeichnet, dass man die Fein- oder Mikrofiltration mit Hilfe eines Metallfilters durchführt, dessen Poren einen Durchmesser von 0,2 bis 40 µm aufweisen.

6. Verfahren gemäss Anspruch 1, dadurch gekennzeichnet, dass sich das Membrantrennverfahren aus den drei Einzeloperationen Ultrafiltration, Diafiltration und Hyperfiltration zusammensetzt.

7. Verfahren gemäss Anspruch 6, dadurch gekennzeichnet, dass man die Hyperfiltration mittels einer anionisch modifizierten Polyacrylnitril- oder Celluloseacetat-Membran mit einem Trennschnitt von 400 bis 500 durchführt.

8. Verfahren gemäss Anspruch 1, dadurch gekennzeichnet, dass das Membrantrennverfahren aus einer Ultrafiltration, einer anschliessend durchgeführten ein- oder mehrstufigen Diafiltration und einer abschliessenden kombinierten Ultrafiltration und Diafiltration besteht.

9. Verfahren gemäss Anspruch 1, dadurch gekennzeichnet, dass sowohl die Farbstoffsynthese wie auch das Membrantrennverfahren kontinuierlich durchgeführt werden.

10. Verfahren gemäss Anspruch 9, dadurch gekennzeichnet, dass Farbstoffsynthese und Membrantrennverfahren in einem Mehrkammerreaktor durchgeführt werden, wobei die einzelnen Membraneinheiten hintereinandergeschaltet am Ende des Reaktors angeordnet sind.

11. Verfahren gemäss Anspruch 1, dadurch gekennzeichnet, dass die gereinigte aufkonzentrierte Farbstoffdispersion einer thermischen Nachbehandlung unterworfen wird.

12. Verfahren gemäss Anspruch 11, dadurch gekennzeichnet, dass die Nachbehandlung kontinuierlich durchgeführt wird durch Erhitzen der Farbstoffdispersion auf eine Temperatur von 40 bis 100 °C bei einer Verweilzeit von 10 Minuten bis 2 Stunden.

13. Das nach dem Verfahren gemäss Anspruch 1 erhaltene feste oder flüssige Farbstoffpräparat.

14. Verwendung des Farbstoffpräparats gemäss Anspruch 13 zum Färben oder Bedrucken von hydrophobem Fasermaterial.

## Claims

1. A process for preparing preparations of water-insoluble to sparingly soluble azo dyes by diazotization and coupling and subsequent purification and concentration of the synthesis dispersion by means of membrane separation and conversion of the purified concentrated dye dispersion into a stable liquid formulation or by removal of water into a solid dye preparation, wherein the membrane separation process consists of at least two serially connected separating operations, the membranes used in each operation having different separation characteristics and being adapted to the degree of dispersion of

the synthesis dispersion.

2. A process according to, claim 1, wherein the membrane separation process consists of an ultrafiltration and a diafiltration.

3. A process according to claim 2, wherein both the ultrafiltration and the diafiltration are conducted using a zirconium oxide membrane having a cut-off of 30,000 to 60,000 and 10,000 to 30,000 respectively.

4. A process according to claim 1, wherein the membrane separation process consists of a microfiltration and a diafiltration.

5. A process according to claim 4, wherein the microfiltration is carried out by means of a metal filter whose pores have a diameter of 0.2 to 40 $\mu m$.

6. A process according to claim 1, wherein the membrane separation process is composed of the three individual operations ultrafiltration, diafiltration and hyperfiltration.

7. A process according to claim 6, wherein the hyperfiltration is carried out by means of an anionically modified polyacrylonitrile or cellulose acetate membrane having a cut-off of 400 to 500.

8. A process according to claim 1, wherein the membrane separation process consists of an ultrafiltration, a subsequent single- or multi-stage diafiltration and a final combined ultrafiltration and diafiltration.

9. A process according to claim 1, wherein both the dye synthesis and the membrane separation process are carried out continuously.

10. A process according to claim 9, wherein the dye synthesis and membrane separation process are carried out in a multichamber reactor in which the individual membrane units are arranged in series at the end of the reactor.

11. A process according to claim 1, wherein the purified concentrated dye dispersion is subjected to a thermal aftertreatment.

12. A process according to claim 11, wherein the aftertreatment is carried out continuously by heating the dye dispersion to a temperature of 40 to 100 °C for a dwell time of 10 minutes to 2 hours.

13. A solid or liquid dye preparation obtained by the process according to claim 1.

14. Use of a dye preparation according to claim 13, for dyeing or printing hydrophobic fibre material.

## Revendications

1. Procédé de fabrication de préparations de colorants azoïques insolubles ou difficilement solubles dans l'eau, par diazotation et copulation, et purification et concentration ultérieures de la dispersion de synthèse au moyen d'un processus de séparation sur membranes, et transformation de la dispersion de colorant purifiée et concentrée en une formulation liquide stable au stockage ou, par déshydratation, en une préparation solide de colorant, **caractérisé** en ce que le processus de séparation sur membranes comporte au moins deux opérations de séparation réalisées l'une après l'autre, les membranes respectives utilisées présentant des caractéristiques différentes de séparation et étant adaptées au degré de dispersion de la dispersion de synthèse.

2. Procédé conforme à la revendication 1, **caractérisé** en ce que le processus de séparation sur membranes est constitué d'une ultrafiltration et d'une diafiltration.

3. Procédé conforme à la revendication 2, **caractérisé** en ce que l'on utilise, aussi bien pour l'ultrafiltration que pour la diafiltration, une membrane à base de zircone, présentant une limite d'exclusion valant respectivement de 30.000 à 60.000 et de 10.000 à 30.000.

**4.** Procédé conforme à la revendication 1, **caractérisé** en ce que le processus de séparation sur membranes est constitué d'une micro-filtration ou d'une filtration fine et d'une diafiltration.

**5.** Procédé conforme à la revendication 4, **caractérisé** en ce que la filtration fine ou la microfiltration est réalisée à l'aide d'un filtre en métal dont les pores présentent un diamètre de 0,2 à 40 µm.

**6.** Procédé conforme à la revendication 1, **caractérisé** en ce que le processus de séparation sur membranes comporte les trois opérations unitaires ultrafiltration, diafiltration et hyperfiltration.

**7.** Procédé conforme à la revendication 6, **caractérisé** en ce que l'on réalise l'hyperfiltration au moyen d'une membrane en acétate de cellulose ou en polyacrylonitrile à modification anionique, présentant une limite d'exclusion de 400 à 500.

**8.** Procédé conforme à la revendication 1, **caractérisé** en ce que le processus de séparation sur membranes est constitué d'une ultrafiltration, d'une diafiltration réalisée à la suite et comportant un ou plusieurs stades, et d'une opération finale d'ultrafiltration et diafiltration combinées.

**9.** Procédé conforme à la revendication 1, **caractérisé** en ce que l'on réalise en continu aussi bien la synthèse du colorant que le processus de séparation sur membranes.

**10.** Procédé conforme à la revendication 9, **caractérisé** en ce que la synthèse du colorant et le processus de séparation sur membranes sont réalisés dans un réacteur à plusieurs chambres, les unités individuelles à membrane étant disposées l'une derrière l'autre au bout du réacteur.

**11.** Procédé conforme à la revendication 1, **caractérisé** en ce que la dispersion de colorant, purifiée et concentrée, est soumise à un post-traitement thermique.

**12.** Procédé conforme à la revendication 11, **caractérisé** en ce que le post-traitement est réalisé en continu par chauffage de la dispersion de colorant à une température de 40 à 100 °C, pour un temps de séjour de 10 minutes à 2 heures.

**13.** Préparation de colorant, solide ou liquide, obtenue selon le procédé conforme à la revendication 1.

**14.** Utilisation d'une préparation de colorant conforme à la revendication 13 pour la teinture ou l'impression de matières fibreuses hydrophobes.